# EUROPÄISCHE PATENTANMELDUNG

(11) **EP 0 701 348 A2**
(43) Veröffentlichungstag der Anmeldung: **13.03.1996**
(21) Anmeldenummer: 95202309.1
(22) Anmeldetag: 25.08.1995
(51) Int. Cl.: H04L 12/56

(54) **Paketübertragungssystem**

(30) Priorität: 09.09.1994 DE 4432061
(71) Anmelder: Philips Patentverwaltung GmbH, D-22335 Hamburg (DE); Philips Electronics N.V., NL-5621 BA Eindhoven (NL)
(72) Erfinder: Wölker, Roland, Dr. rer. nat, c/o Philips, D-22335 Hamburg (DE); Nagel, Peter, Dr. Ing., c/o Philips, D-22335 Hamburg (DE)
(74) Vertreter: Volmer, Georg, Dipl.-Ing.

(57) **Zusammenfassung**

Die Erfindung bezieht sich auf ein Paketübertragungssystem mit mehreren Eingangsschaltungen (2) jeweils zur Vervielfachung einer auf einer Eingangsleitung (1) eingetroffenen Zelle, die jeweils zur Übertragung über unterschiedliche Koppelfelder (3, 4) vorgesehen sind, und zur Erzeugung einer der jeweiligen Zelle mitzuliefernden Zeitmarke und mit mehreren Ausgangsschaltungen (5) zur Auswahl einer zur Weiterleitung auf einer Ausgangsleitung (6) vorgesehenen Zelle aus einer Mehrzahl von die gleiche Zeitmarke aufweisenden, empfangenen Zellen. Eine Eingangsschaltung (2) ist zur weiteren Erzeugung einer die Eingangsschaltung (2) kennzeichnenden und der jeweiligen Zelle mitzuliefernden Eingangsnummer und die Ausgangsschaltung (5) anhand der Zeitmarke und der Eingangsnummer zur Herstellung der korrekten Reihenfolge von aufeinanderfolgenden Zellen vorgesehen.

## Beschreibung

Die Erfindung bezieht sich auf ein Paketübertragungssystem mit mehreren Eingangsschaltungen jeweils zur Vervielfachung einer auf einer Eingangsleitung eingetroffenen Zelle, die jeweils zur Übertragung über unterschiedliche Koppelfelder vorgesehen sind, und zur Erzeugung einer der jeweiligen Zelle mitzuliefernden Zeitmarke und mit mehreren Ausgangsschaltungen zur Auswahl einer zur Weiterleitung auf einer Ausgangsleitung vorgesehenen Zelle aus einer Mehrzahl von die gleiche Zeitmarke aufweisenden, empfangenen Zellen.

Ein solches Paketübertragungssystem ist aus der EP-0 384 936 A1 bekannt, das nach dem asynchronen Transfermodus arbeitet. Bei Verwendung eines asynchronen Transfermodus in einem Übertragungssystem werden Nutzinformationen, zum Beispiel Fernsprech-, Bild- oder Tonsignale in Paketen fester Länge über Anordnungen zur digitalen Signalverarbeitung gesendet. Als ein Paket fester Länge wird eine Zelle bezeichnet, die eine vorbestimmte Anzahl von Bytes (53 Bytes) aufweist. Jede Zelle besteht aus einem Kopffeld mit einer Länge von 5 Bytes und einem Informationsfeld, in dem die Nutzinformation untergebracht ist, mit einer Länge von 48 Bytes. In einem solchen Kopffeld sind Wegekennungen, Daten zur Fehlererkennung und Daten für Steuerinformationen vorhanden. Unter Wegekennungen sind Bündelkennungen und Verbindungskennungen zu verstehen. Die Verbindungskennung, die auch als VCI (virtual channel identifier) bezeichnet wird, enthält die Angabe über den Bestimmungsort der Zelle in dem System. Zur Übermittlung einer Zelle wird anhand der Verbindungskennung ein virtueller Kanal zur Verfügung gestellt. In der Regel wird ein VCI nach Erreichen einer Vermittlungsstelle jeweils verändert. Ein Bündel mehrerer virtueller Kanäle wird als virtueller Pfad bezeichnet. Ein virtueller Pfad wird durch die Bündelkennung gekennzeichnet, die VPI (virtual path identifier) genannt wird. Zellen sind aufeinanderfolgend bestimmten Zeitabschnitten zugeordnet. Die Dauer eines solchen Zeitabschnittes hängt von der zugrundegelegten Taktfrequenz der Übertragungskomponente ab. Falls keine Nutzinformation vorhanden ist, werden in einem solchen Zeitabschnitt Leerzellen übertragen, d.h. Zellen ohne Nutzinformation. Zellen die eine Nutzinformation beinhalten werden als Nutzzellen bezeichnet.

Bei dem oben genannten Paketübertragungssystem werden auf Eingangsleitungen eintreffende Pakete in jeweils einer Eingangsschaltung verdoppelt und über jeweils zwei Koppelfelder zu einer von mehreren Ausgangsschaltungen übertragen. In der Eingangsschaltung wird dem Paket eine Folgenummer oder Zeitmarke und eine zusätzliche Wegeinformation hinzugefügt. Die Wegeinformation, die entweder über eine weitere Verbindung oder über die gleiche Verbindung wie die Zelle (Wegeinformation an Zelle angefügt) übertragen wird, gibt eine virtuelle Verbindung zwischen einer Eingangsschaltung und einer Ausgangsschaltung an. In einer Ausgangsschaltung wird überprüft, ob die Pakete mit der gleichen Zeitmarke korrekt übertragen worden sind. Nur das fehlerfrei übertragene Paket wird weiterverarbeitet. Sollten beide Pakete fehlerfrei übertragen worden sein, wird eines davon weiterverarbeitet. Bei diesem Paketübertragungssystem ist es nicht möglich, Pakete, die in beiden Koppelfeldern unterschiedliche Wege durchlaufen haben und zu unterschiedlichen Zeiten in einer Ausgangsschaltung ankommen, wieder in die richtige zeitliche Reihenfolge zu setzen.

Der Erfindung liegt daher die Aufgabe zugrunde, ein Paketübertragungssystem zu schaffen, bei dem wenigstens zwei Zellen mit der gleichen Zeitmarke, die zu unterschiedlichen Zeitpunkten eingetroffen sind, wieder in die richtige Reihenfolge zu bringen.

Die Aufgabe wird durch ein Paketübertragungssystem der eingangs genannten Art dadurch gelöst, daß eine Eingangsschaltung zur weiteren Erzeugung einer die Eingangsschaltung kennzeichnenden und der jeweiligen Zelle mitzuliefernden Eingangsnummer und die Ausgangsschaltung anhand der Zeitmarke und der Eingangsnummer zur Herstellung der korrekten Reihenfolge von aufeinanderfolgenden Zellen vorgesehen ist.

Bei dem erfindungsgemäßen Paketübertragungssystem wird in einer Eingangsschaltung außer einer Zeitmarke auch eine Eingangsnummer der zu übertragenden Zelle hinzugefügt. Die Zeitmarke (time stamp) kennzeichnet den Zeitpunkt des Eintreffens einer Zelle in einer Eingangsschaltung und kann beispielsweise von einem Zähler erzeugt werden. Die Eingangsnummer (inlet number) gibt die Eingangsleitung oder Eingangsschaltung an, auf der die Zelle eingetroffen ist. In der Eingangsschaltung wird die Zelle entsprechend der Anzahl der Koppelfelder vervielfacht und jeweils zu den einzelnen Koppelfeldern gegeben. Nach Durchlaufen der Koppelfelder treffen die Zellen in einer Ausgangsschaltung meist zu unterschiedlichen Zeitpunkten ein. In der Ausgangsschaltung wird die Zelle überprüft, ob sie einen Fehler aufweist. Weist eine Zelle einen schwerwiegenden Fehler auf (z.B. Information im Kopffeld fehlerhaft), wird sie verworfen. Bei einem tolerierbaren Fehler (z.B. ein Bit ist im Informationsfeld fehlerhaft) wird sie mit der Information weiterverarbeitet, daß sie fehlerbehaftet ist. Ferner wird in der Ausgangsschaltung bestimmt, welche Zelle von den Zellen, welche die gleiche Zeitmarke und Eingangsnumer aufweisen, zur zugeordneten Ausgangsleitung weitergegeben wird. Hierbei wird in der Regel eine fehlerfreie Zelle weiterverarbeitet. Wenn mehrere Zellen die gleiche Zeitmarke aber unterschiedliche Eingangsnummern besitzen, muß noch eine Auslesereihenfolge der Zellen für eine der Ausgangsschaltung zugeordnete Ausgangsleitung festgelegt werden. Im Gegensatz zum oben genannten Stand der Technik ist bei der Erfindung auf jeden Fall für einzeln auftretende Zellen eine feste Verzögerungszeit vorgegeben. Hierdurch ergibt sich eine Jitterreduktion.

Zur Festlegung einer Auslesereihenfolge ist eine Speicherung der Zellen in der Ausgangsschaltung erforderlich. Daher ist die Ausgangsschaltung
- zur Speicherung einer von mehreren fehlerfrei übertragenen Zellen mit der gleichen Zeitmarke und der Eingangsnummer,
- zur Speicherung der Zeitmarke und der Eingangsnummer der zu speicherden Zelle und
- zur Weiterleitung einer Zelle mit der ältesten gespeicherten Zeitmarke auf die zugeordnete Ausgangsleitung
vorgesehen.

Sind Zellen mit bestimmten Zeitmarken ausgelesen worden, muß verhindert werden, daß Zellen mit diesen bestimmten Zeitmarken später noch in der Ausgangsschaltung verarbeitet werden. Daher ist die Ausgangsschaltung zur Speicherung einer Zelle vorgesehen, wenn diese in einem von dem Sendezeitpunkt in der Eingangsschaltung abhängigen Zeitabschnitt eingetroffen ist. Eine fehlerfreie Zelle wird außerdem nur dann in der Ausgangsschaltung gespeichert, wenn keine Zelle mit der gleichen Zeitmarke und Eingangsnummer gespeichert ist oder eine fehlerhafte Zelle mit der gleichen Zeitmarke und Eingangsnummer gespeichert ist.

Die Ausgangsschaltung ist zur Weiterleitung einer gespeicherten Zelle mit der ältesten Zeitmarke, die außerhalb des Zeitabschnittes liegt, auf die zugeordnete Ausgangsleitung vorgesehen.

Wenn in einer Ausgangsschaltung mehrere Zellen mit der ältesten Zeitmarke aber unterschiedlichen Eingangsnummern gespeichert sind, werden die Zellen in einer vorgegebenen Reihenfolge weitergeleitet.

Eine Ausführungsform der Ausgangsschaltung enthält eine Statusspeicheranordnung zur Speicherung der Zeitmarke, der Eingangsnummer und des Status einer Zelle, eine Hauptspeicheranordnung zur Speicherung der zugeordneten Zelle und eine Steuerschaltung zur Steuerung der Statusspeicheranordnung und der Hauptspeicheranordnung. Die Steuerschaltung koordiniert die Einschreib- und Auslesevorgänge in die Status- und Hauptspeicheranordnung und überprüft auch Daten einer Zelle. Als Aufgaben für die Steuerschaltung ist vorgesehen, daß diese
- zur Freigabe des Einschreibens der Zelle, der Zeitmarke, der Eingangsnummer und des Status der Zelle bei nicht die gleiche Zeitmarke und Eingangsnummer aufweisenden, gespeicherten Zellen,
- zur Freigabe des Einschreibens der Zelle und des Status der Zelle bei einer gespeicherten, fehlerbehafteten Zelle mit der gleichen Zeitmarke und Eingangsnummer,
- zur Freigabe der Statusspeicheranordnung für die Bestimmung aller Hauptspeicheradressen von bestimmten, außerhalb des Zeitabschnittes liegenden Zellen,
- zur Freigabe der Statusspeicheranordnung für die Lieferung der Hauptspeicheradresse einer mit der ältesten Zeitmarke gespeicherten Zelle und
- zur Freigabe des Auslesens der unter der Hauptspeicheradresse gespeicherten Zelle vorgesehen ist.

Ferner ist die Steuerschaltung zur Prüfung vorgesehen, ob eine Zelle in dem Zeitabschnitt eingetroffen ist. Hierbei wird von einer Zähleranordnung der Steuerschaltung der Anfangswert und der Endwert des Zeitabschnittes geliefert. Die Zähleranordnung enthält mehrere Zähler, die so synchronisiert sind, daß ein vorgegebener, den Zeitabschnitt angebenden Unterschied zwischen den Anfangswert und Endwert liefernden Zählern eingestellt ist. Durch die Verwendung von Zeitmarken und Eingangsnummern ergibt sich gegenüber dem Stand der Technik ein geringerer Aufwand, da für die Findung der richtigen Zellreihenfolge nicht von gespeicherten VCI- und VPI-Werten (große Tabellen) auszugehen ist. Die Anzahl der gespeicherten Zellen und damit die Größe einer Tabelle hängt von der Dauer des Zeitabschnittes ab.

In einer Ausführungsform der Statusspeicheranordnung enthält diese einen Statusspeicher, der zur Speicherung der Zeitmarken, der Eingangsnummern und des Status der Zellen, zur Durchführung von Vergleichen zwischen gespeicherten und angelegten Daten und zur Weiterleitung der Vergleichsergebnisse an die Steuerschaltung vorgesehen ist. Der Statusspeicher kann ein Content-addressable Memory (CAM) sein, der beispielsweise in der US-PS 4 791 606 näher beschrieben ist. Dieser Speicher liefert nach Anlegen von Daten eine Adresse und führt hierzu Vergleichsoperationen zwischen gespeicherten Daten und zugeführten Daten durch.

Die Steuerschaltung gewinnt die Adresse einer in die Hauptspeicheranordnung zu schreibenden Zelle oder einer aus der Hauptspeicheranordnung zu lesenden Zelle durch von der Statusspeicheranordnung durchzuführenden Operationen. Hierbei enthält die Statusspeicheranordnung einen ersten Prioritätsdecoder zur Ermittlung einer Hauptspeicheradresse für den Einschreibvorgang einer Zelle und einen Vielfach-Prioritätsdecoder zur Ermittlung von Hauptspeicheradressen für den Auslesevorgang einer oder mehrerer Zellen. Zur Ermittlung der Hauptspeicheradresse für einen Einschreibvorgang einer Zelle dient der Statusspeicher zur Lieferung eines Codewortes für eine bestimmte Zeitmarke und bestimmte Eingangsnummer und der erste Prioritätsdecoder zur Lieferung einer Hauptspeicheradresse durch Decodierung des Codewortes. Weiter ist der Statusspeicher, um die Hauptspeicheradressen für den Auslesevorgang einer oder mehrerer Zellen zu ermitteln, zur Lieferung eines Codewortes für eine bestimmte Zeitmarke und der Vielfach-Prioritätsdecoder zur Lieferung mindestens einer Hauptspeicheradresse durch Decodierung des Codewortes vorgesehen.

Ein Ausführungsbeispiel der Erfindung wird nachstehend anhand der Zeichnungen erläutert. Es zeigen:
- Fig. 1: ein schematisch dargestelltes Paketübertragungssystem,
- Fig. 2: eine in dem Paketübertragungssystem nach Fig. 1 verwendete Eingangsschaltung,
- Fig. 3: eine in dem Paketübertragungssystem nach Fig. 1 verwendete Ausgangsschaltung,
- Fig. 4: eine in einer Ausgangsschaltung nach Fig. 3 verwendete Empfangsschaltung,
- Fig. 5: eine in einer Ausgangsschaltung nach Fig. 3 verwendete Zähleranordnung,
- Fig. 6: eine in einer Ausgangsschaltung nach Fig. 3 verwendete Statusspeicheranordnung und
- Fig. 7: einen in der Statusspeicheranordnung nach Fig. 6 verwendeten Prioritätsdecoder.

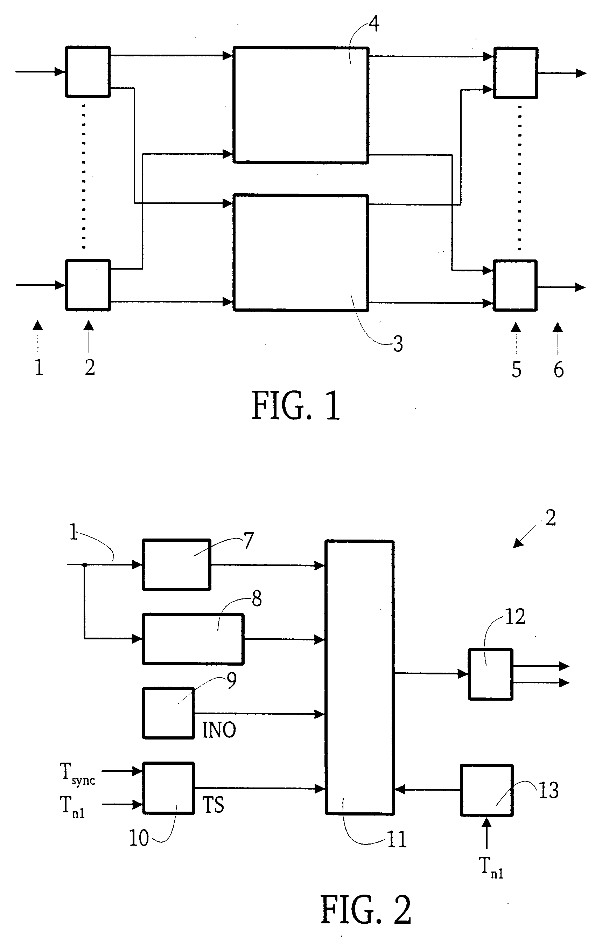

In Fig. 1 ist ein Ausführungsbeispiel eines Paketübertragungssystems dargestellt, welches nach dem asynchronen Transfermodus arbeitet und Zellen überträgt. Die auf Eingangsleitungen 1 eintreffenden Zellen werden jeweils Eingangsschaltungen 2 zugeführt. In einer Eingangsschaltung 2 wird eine eintreffende Zelle dupliziert, mit einer Wegeinformation, einer Zeitmarke TS, einer Eingangsnummer INO und weiteren Informationen versehen. Diese Informationen werden als Zusatzinformation (tag) an die Zelle angefügt. Die beiden identischen Zellen werden über jeweils ein Koppelfeld 3 und 4 zu Ausgangsschaltungen 5 geführt. Die Zellen können dabei in den beiden Koppelfeldern 3 und 4 verschiedene Wege durchlaufen und somit ist es möglich, daß die beiden identischen Zellen nicht zum gleichen Zeitpunkt in einer Ausgangsschaltung 5 eintreffen. In einer Ausgangsschaltung 5 wird die korrekte zeitliche Reihenfolge der Zellen wieder hergestellt und eine weitgehend fehlerfreie Zelle auf die an die Ausgangsschaltungen 5 angeschlossenen Ausgangsleitungen 6 zur Weiterverarbeitung gegeben. Es werden nur solche Zellen weitergegeben, die bestimmte tolerierbare Fehler aufweisen. Wenn beispielsweise ein Bit im Informationsfeld fehlerhaft ist, wird dies toleriert. Nur bei schwerwiegenden Fehlern wird die Zelle nicht weitervermittelt.

In der Fig. 2 ist ein Ausführungsbeispiel einer Eingangsschaltung 2 gezeigt. Diese enthält ein Register 7 zur Zwischenspeicherung einer auf einer Eingangsleitung 1 eintreffenden Zelle, eine Umsetzerschaltung 8, die aus dem im Kopffeld der Zelle enthaltenen Informationen wenigstens eine Wegeinformation bildet, ein weiteres Register 9 in dem die für die Eingangsschaltung spezifische Eingangsnummer INO (inlet number) gespeichert ist, einen Zähler 10, der eine Zeitmarke TS (time stamp) mit jedem Auftreten bzw. Zwischenspeichern einer Zelle in dem Register 7 erzeugt, und einen Multiplexer 11, der die Ausgänge der Register 7 und 9, der Umsetzerschaltung 8 und des Zählers 9 auf eine Duplizierschaltung 12 schaltet. Der Multiplexer 11 wird noch von einer Kontrollschaltung 13 gesteuert, die ein Taktsignal Tₙ₁ erhält. Das Taktsignal Tₙ₁ ist mit dem Auftreten einer Zelle synchronisiert. Die Duplizierschaltung 12 liefert identische Zellen an die Koppelfelder 3 und 4. Die im Register 9 gespeicherte Eingangsnummer INO gibt jeweils die Eingangsleitung 1 an, auf der die Zelle eingetroffen ist. Der Zähler 10 wird jeweils von dem von einem übergeordneten Managementsystem erzeugten Managmenttakt T_{sync} zu bestimmten Zeitpunkten zurückgesetzt und von dem lokalen Taktsignal Tₙ₁ getaktet, das jeweils einen für das Weiterzählen im Zähler 10 relevante Flanke mit dem Auftreten einer Zelle erzeugt. Die Wegeinformation, die in der Umsetzerschaltung 8 angefügt wird, gibt den Bestimmungsort bzw. die Ausgangsschaltung 5 an, zu der die Zelle gelangen soll.

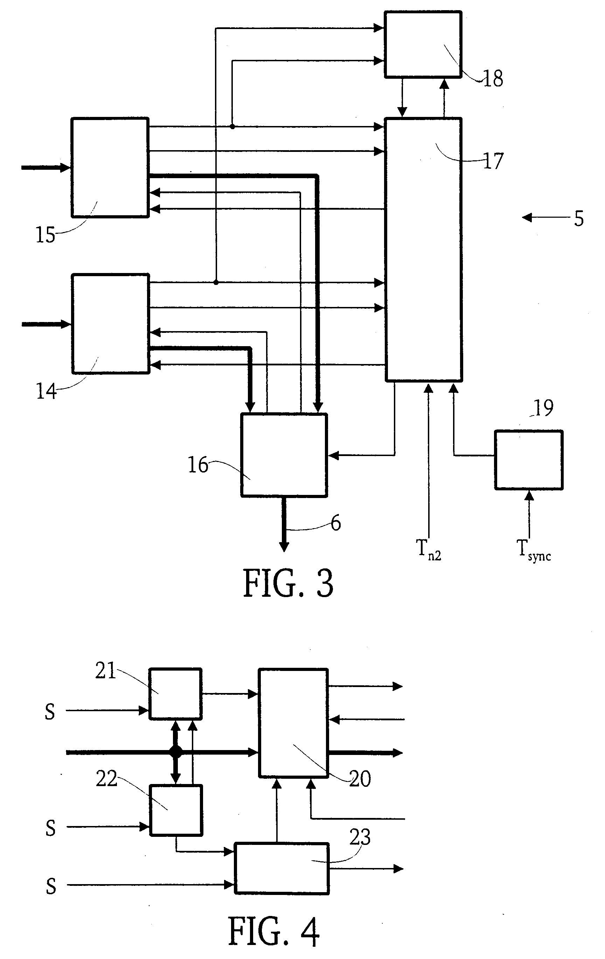

Eine Ausgangsschaltung 5 (Fig. 3) weist jeweils zwei Empfangsschaltungen 14 und 15 auf. Die Empfangsschaltung 14 ist mit einem Ausgang des Koppelfeldes 3 und die Empfangsschaltung 15 mit einem Ausgang des Koppelfeldes 4 verbunden. Bestimmte weitgehend fehlerfrei empfangene Zellen werden von den Empfangsschaltungen 14 und 15 zu einer in der Ausgangsschaltung 5 enthaltenen Ausgangsspeicheranordnung 16 weitergeleitet und von der Ausgangsspeicheranordnung 16 zu bestimmten von einer Steuerschaltung 17 vorgegebenen Zeitpunkten auf eine Ausgangsleitung 6 gegeben. Zusätzlich enthält die Ausgangsschaltung 5 noch eine Statusspeicheranordnung 18 und eine Zähleranordnung 19.

Ein Ausführungsbeispiel einer Empfangsschaltung 14 oder 15 ist etwas detaillierter in der Fig. 4 aufgeführt. Eine solche Empfangsschaltung 14 oder 15 erhält einen Zellenstrom von einem Koppelfeld 3 oder 4 und beispielsweise einen Synchronisationsimpuls S, der den Beginn einer Zelle angibt. Der Synchronisationsimpuls S kann auch aus einer nicht dargestellten Schaltung aus dem Zellenstrom gewonnen werden. Wenn ein Synchronisationsimpuls S auftritt, wird eine Zelle in einen Empfangsspeicher 20 eingeschrieben und die Zelle weiter einer Entnahmeschaltung 21 und einer Zellprüfschaltung 22 zugeführt. Die Entnahmeschaltung 21 und die Zellprüfschaltung 22 entnehmen bestimmte Bits der Zelle. Die Entnahmeschaltung 21 entnimmt der Zelle die Zeitmarke TS, die Eingangsnummer INO und eine Statusinformation CSF (cell status field). Die Statusinformation CSF ist auf logisch "1" gesetzt, wenn die Information fehlerbehaftet ist und sonst logisch "0" gesetzt.

In der Zellprüfschaltung 22 wird anhand bestimmter für Prüfzwecke vorgesehener Bits überprüft, ob die Information im Kopffeld und im Informationsfeld der Zelle fehlerfrei übertragen worden ist. Die Prüfinformation sendet die Zellprüfschaltung 22 an die Entnahmeschaltung 21 und an eine Empfangssteuerschaltung 23. Diese Empfangssteuerschaltung 23 empfängt ebenfalls den Synchronisationsimpuls S und steuert den Einschreibvorgang in den Empfangsspeicher 20. Wenn die Prüfung in der Zellprüfschaltung 22 ergeben hat, daß die Zelle einen schwerwiegenden Fehler aufweist, wird der Speicherplatz, in den die Zelle eingetragen worden ist, wieder als frei gekennzeichnet. Im anderen Fall, wenn die Zelle weitgehend fehlerfrei übertragen worden ist, bleibt der Speicherplatz belegt. Wenn eine Zelle im Empfangsspeicher 20 abgespeichert ist, und als belegt angesehen wird, sendet die Empfangssteuerschaltung 23 einen Fertig-Impuls an die Steuerschaltung 17.

Die Entnahmeschaltung 21 empfängt die Prüfinformation von der Zellprüfschaltung 22. Wenn die Zelle fehlerbehaftet ist wird die Statusinformation CSF, wenn sie nicht logisch "1" ist (Fehler ist früher erkannt worden), auf logisch "1" gesetzt. Im anderen Fall behält sie ihren alten Status. Die Entnahmeschaltung 21 sendet ferner die aus der Zelle entnommenen Informationen an den Empfangsspeicher 20, der diese Informationen ebenfalls zwischenspeichert. Weiter gibt die Entnahmeschaltung eine Information I0 und I1 an den Empfangsspeicher 20. Ist eine Zelle von der Empfangsschaltung 14 empfangen worden, ist I0 logisch "1" und I1 logisch "0" gesetzt. Im anderen Fall, wenn die Empfangsschaltung 15 eine Zelle empfangen hat, ist I0 logisch "0" und I1 logisch "1" gesetzt. Analog dazu werden zwei Statusinformationen CSF0 und CSF1 im Empfangsspeicher zwischengespeichert. Ist eine Zelle von der Empfangsschaltung 14 empfangen worden ist CSF1 logisch "0" und die Statusinformation CSF0 hängt davon ab, ob die Zelle fehlerbehaftet ist. Bei Empfang einer Zelle von der Empfangsschaltung 15 sind die Statusinformationen umgekehrt belegt. CSF0 ist in diesem Fall logisch "0" und der Wert von CSF1 hängt davon, ob die Zelle fehlerbehaftet ist.

Der Empfangsspeicher 20 erhält einen ersten Freigabeimpuls von der Ausgangsspeicheranordnung 16, wenn dieser die zwischengespeicherte Zelle zum Einschreiben anfordert. Von der Steuerschaltung 17 erhält der Empfangsspeicher 20 ebenfalls einen Freigabeimpuls, wenn die weiteren Informationen ausgewertet werden sollen. Diese werden dann zur Statusspeicheranordnung 18 und zur Steuerschaltung 17 gegeben.

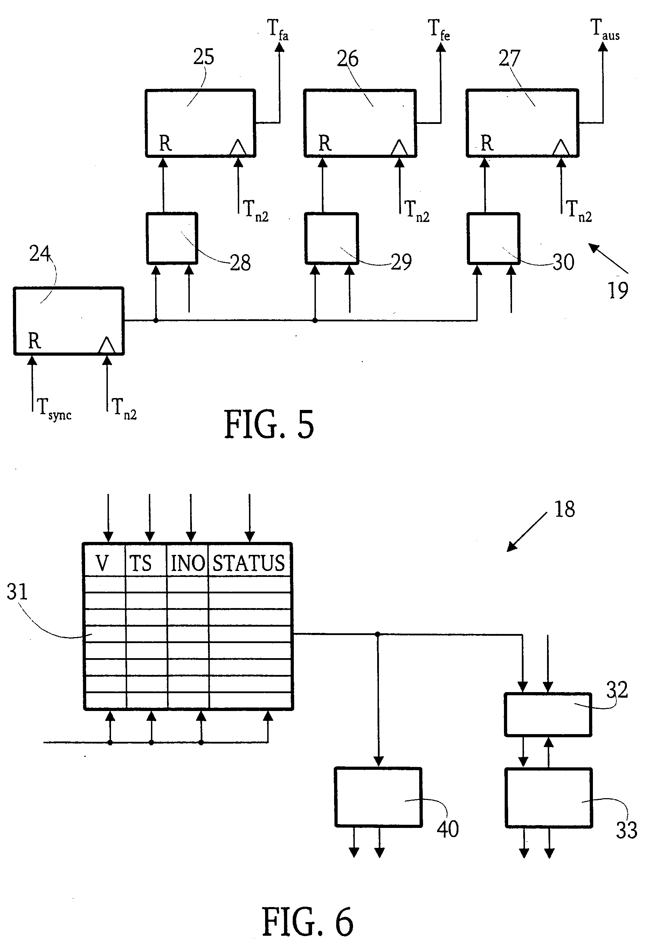

In der Fig. 5 ist ein Ausführungsbeispiel der Zähleranordnung 19 dargestellt. Diese enthält beispielsweise vier Acht-Bit-Zähler 24, 25, 26 und 27 und drei Vergleicher 28, 29 und 30. Der Zähler 24 wird jeweils durch einen Impuls des von dem Managementsystem erzeugten Managementtaktes T_{sync} zurückgesetzt. Der Zähler 24 wird von einem lokalen Taktsignal Tₙ₂ getaktet, das einen Impuls mit dem Auftreten einer Zelle liefert. Ein Impuls des Managementtaktes T_{sync} tritt beispielsweise nach zweihundertfünfzig Zählungen des Zählers 24 auf. Hiermit wird eine Synchronisierung des vom Managementsystems erzeugten Managementtaktes T_{sync} mit dem lokalen Takt Tₙ₂ bewirkt. Eine solche Synchronisierung findet, auch wenn sie explizit nicht erwähnt ist, in anderen Anordnungen des Paketübertragungssystems statt. Eine solche Synchronisierung ist erforderlich, da die Taktsignale in der Regel von unterschiedlichen örtlich getrennten Taktversorgungen erzeugt werden.

Der Vergleicher 28 gibt einen Rücksetzimpuls an den Zähler 25 ab, wenn der Zählwert des Zählers 24 einen Wert von beispielsweise 20 erreicht hat. Der Wert 20 setzt sich aus einer zu dem Zeitpunkt des letzten Impulses des Managementtaktes T_{sync} abgeleiteten konstanten minimalen Verzögerung D_{const} eines Koppelfeldes 3 oder 4 zusammen. Der Zähler 25 erzeugt Zählwerte T_{fa} und wird ebenfalls von dem Taktsignal Tₙ₂ getaktet. Der Zähler 26 erhält ein Rücksetzimpuls von dem Vergleicher 29, wenn der Zählwert des Zählers 24 einen Wert von beispielsweise 100 erreicht hat. Der Wert 100 setzt sich aus dem Wert D_{const} und einer zulässigen maximalen Verzögerung Dₘₐₓ zusammen. Der Zähler 26 erzeugt Zählwerte T_{fe}. Ein weiterer Vergleicher 30 vergleicht den Zählerstand des Zählers 24 mit einem Wert, der sich aus dem Wert D_{const}, dem Wert Dₘₐₓ und einer Zeitverzögerung ΔT zusamensetzt. Ist dieser Wert, (beispielsweise 105) erreicht, wird der Zählwerte Tₐᵤₛ erzeugende Zähler 27 durch einen Rücksetzimpuls vom Vergleicher 30 zurückgesetzt.

Die Zähler 25 und 26 haben nominell jeweils einen Unterschied von 80 Zählwerten. Diese 80 Zählwerte stellen einen Zeitabschnitt dar, in dem eine Zelle in der Ausgangsschaltung 5 eingetroffen sein muß. Der Zähler 25 gibt für eine Zelle mit der Zeitmarke TS einen Anfangswert T_{fa} und der Zähler 26 einen Endwert T_{fe} an. Liegt die eingetroffene Zelle außerhalb dieses Zeitabschnittes wird sie nicht weiterverarbeitet, wie weiter unten erläutert wird. Der Zähler 27 liefert den Wert Tₐᵤₛ, dessen Wert die Zeitmarken der aus der Ausgangsspeicheranordnung auszulesenden Zellen angibt.

Die Steuerschaltung 17 (Fig. 3) erhält von der Zähleranordnung 19 die Zählwerte T_{fa}, T_{fe} und Tₐᵤₛ und auch das lokale Taktsignal Tₙ₂, das einen neuen Zyklus zur Bearbeitung von empfangenen Zellen angibt. Nach der Abarbeitung von jeweils einer Zelle der beiden Empfangsschaltungen 14 und 15 und nach Erhalt des Fertig-Impulses von einer Empfangssteuerschaltung 23 einer Empfangsschaltung 14 oder 15 fordert die Steuerschaltung 17 mittels eines Freigabe-Impulses die nächste Zelle zur Bearbeitung an. Von der Steuerschaltung 17 wird der Schreib- und Lesevorgang in die Ausgangsspeicheranordnung 16 gesteuert. Ferner gibt die Steuerschaltung 17 die Empfangsspeicher 20 in den Empfangsschaltungen 14 und 15 zur Lieferung der Zeitmarke TS, der Eingangsnummer INO, der Statusinformationen CSF0 und CSF1 und der weiteren Information I0 und I1 an die Statusspeicheranordnung 18 frei. Diese Informationen erhält auch die Steuerschaltung 17. Anhand der Zeitmarke TS wird in der Steuerschaltung 17 geprüft, ob die Zelle im Zeitabschnitt eingetroffen ist. Ist diese Bedingung erfüllt, werden verschiedene weiter unten beschriebene Maßnahmen in der Steuerschaltung 17 durchgeführt. Anschließend wird gegebenfalls eine Speicherzelle in der Ausgangsspeicheranordnung 16 mit einer neuen Zelle belegt.

In Fig. 6 ist ein Ausführungsbeispiel einer Statusspeicheranordnung 18 mit einem Statusspeicher 31, einem ersten Prioritätsdecoder 40, einem Pufferspeicher 32 (FIFO) und einem Vielfach-Prioritätsdecoder 33 dargestellt. Der Statusspeicher 31 kann ein Content-addressable Memory (CAM) sein, der beispielsweise in der US-PS 4 791 606 näher beschrieben ist. Dieser Speicher liefert oder speichert Daten nach Anlegen einer Adresse. Weiter kann der Statusspeicher 31 auch Vergleichsoperationen durchführen.

Im folgenden werden die Operationen, die in der Statusspeicheranordnung 18 und der Steuerschaltung 17 ablaufen, unabhängig von der Herkunft (Empfangsschaltung 14 oder 15) der Zellen erläutert.

Wie oben beschrieben, gibt die Steuerschaltung 17 die Statusspeicheranordnung 18 zuerst zum Vergleich von Daten frei. Zuerst wird eine Zeitmarke und Eingangsnummer von einer Empfangsschaltung 14 oder 15 an den Statusspeicher 31 angelegt und überprüft, ob in einer Speicherzelle der identische Eintrag existiert. Für jede Speicherzelle wird ein 1 Bit-Vergleichsergebnis vom Statusspeicher 31 geliefert. Die Gesamtheit der Vergleichsergebnisse bildet ein Codewort, welches dem ersten Prioritätsdecoder 40 zur Decodierung zugeführt wird. Wenn der Statusspeicher 31 beispielsweise 8 Speicherzellen besitzt und die zweite Speicherzelle den identischen Eintrag besitzt, wird das Codewort "01000000" an den ersten Prioritätsdecoder 40 übermittelt.

Der erste Prioritätsdecoder 40 formt aus dem Codewort eine Adresse, wenn mindestens ein Vergleichsergebnis die gleiche Zeitmarke und Eingangsnummer ergeben hat. Weiter liefert der erste Prioritätsdecoder 40 ein Ergebnissignal, welches angibt, ob eine gleiche Zeitmarke und Eingangsnummer gefunden worden ist. Ein Prioritätsdecoder ist ein 1-aus-n-Decoder, der beispielsweise näher in dem Buch "Halbleiter-Schaltungstechnik" von U. Tietze und Ch. Schenk, 9. Auflage, 1990, Springer-Verlag, Seiten 228 und 229, beschrieben ist. Ist keine solche gleiche Zeitmarke und Eingangsnummer gefunden worden, veranlaßt die Steuerschaltung 17 über ein Einschreibsignal das Einschreiben der Zeitmarke TS, der Eingangsnummer INO, der Statusinformation CSF0 und CSF1 und der weiteren Informationen I0 und I1 in einen freien Speicherplatz. Die freien Speicherplätze werden beispielsweise in einem weiteren nicht dargestellten Speicher abgespeichert, den die Steuerschaltung 17 verwaltet. Ein belegter Speicherplatz wird durch eine logische "1" eines Gültigkeitsbits V gekennzeichnet. Die Statusinformation CSF0 und CSF1 und die weiteren Informationen I0 und I1 werden in dem Feld STATUS des Speicherplatzes eingeschrieben.

Falls aber eine gleiche Zeitmarke und Eingangsnummer gefunden worden ist, wird der Steuerschaltung 17 eine Adresse vom ersten Prioritätsdecoder 40 geliefert. Die Steuerschaltung 17 führt einen Lesezugriff auf den Statusspeicher 31 aus und erhält die gespeicherte Statusinformation CSF0 und CSF1 und die weiteren Informationen I0 und I1. Anschließend werden von der Steuerschaltung 17 Vergleichsoperationen durchgeführt. Hierbei müssen drei Fälle unterschieden werden:
1) Es sei vorausgesetzt, daß die Zelle von der Empfangsschaltung 14 kommt, d.h. die empfangene Information I0 ist logisch "1" und der Eintrag im Speicherplatz ebenfalls I0 = "1", empfangen worden ist, wird die Zelle nicht weiter verarbeitet. Der Eintrag im Statusspeicher 31 und der Speicherplatz in der Ausgangsspeicheranordnung 16, welche die Zelle für die überprüfte Zeitmarke und Eingangsnummer enthält, wird freigegeben. Das Gültigkeitsbit V im Statusspeicher 31 wird auf "0" gesetzt. Das analoge Verfahren ist vorgesehen, wenn eine Zelle von der Empfangsschaltung 15 kommt.
2) Es sei beim zweiten Fall vorausgesetzt, daß die Zelle von der Empfangsschaltung 14 kommt. Im Statusspeicher 31 ist für die zugeordnete Zeitmarke und Eingangsnummer I0 = "0", I1 = "1", CSF1 = "0" (Zelle ist fehlerfrei) und ein beliebiges CSF0 eingetragen. Eine von der Empfangsschaltung 14 eintreffende Zelle (I0 = "1") wird nicht in der Ausgangsspeicheranordnung 16 gespeichert. Dort bleibt die gleiche, von der Empfangsschaltung 15 gespeicherte Zelle weiter erhalten. Es ist jeweils nur ein Speicherplatz für beide Zellen in der Ausgangsspeicheranordnung 16 vorhanden. Die Steuerschaltung 17 sendet also keinen Einschreibbefehl an die Ausgangsspeicheranordnung 16. Dafür wird aber von der Steuerschaltung 17 ein Einschreibbefehl an den Statusspeicher 31 zum Einschreiben der Statusinformation CSFO und der weiteren Information I0 zu dem zugehörigem Speicherplatz gesendet. Hierbei wird auch die zugehörige Adresse übermittelt. Das analoge Verfahren ist vorgesehen, wenn eine Zelle von der Empfangsschaltung 15 kommt.
3) Beim dritten Fall sei ebenfalls vorausgesetzt, daß die Zelle von der Empfangsschaltung 14 stammt. In dem Statusspeicher ist unter der gesuchten Zeitmarke und Eingangsnumer I0 = "0", I1 = "1", CSF1 = "1" (Zelle ist fehlerhaft) und ein beliebiges CSF0 eingetragen. Aufgrund der gespeicherten, fehlerhaften Zelle wird eine von der Empfangsschaltung 14 eintreffende Zelle (I0 = "1") in der Ausgangsspeicheranordnung 16 gespeichert. Hierzu liefert die Steuerschaltung 17 einen Einschreibbefehl und die decodierte Adresse. Dabei wird die fehlerhaft gespeicherte Zelle überschrieben. Die Statusinformation CSF0 und die weitere Information I0 werden noch im Statusspeicher 31 eingeschrieben. Hierbei wird auch die zugehörige Adresse übermittelt. Das analoge Verfahren ist vorgesehen, wenn eine Zelle von der Empfangsschaltung 15 kommt.

In dem dritten Fall könnte, wenn die zweite Zelle auch fehlerhaft (CSF0 = "1") ist, der Speicherplatz wieder freigegeben werden und auch die zweite Zelle nicht weiter verarbeitet werden.

Für das Weiterleiten einer Zelle auf die zugeordnete Ausgangsleitung werden von der Steuerschaltung 17 und der Statusspeicheranordnung 18 weitere Steuervorgänge durchgeführt. Die Steuerschaltung 17 sucht alle Zellen mittels der Statusspeicheranordnung 18, deren Zeitmarken gleich Tₐᵤₛ sind. Diese Zeitmarke, die gleich Tₐᵤₛ ist, wird an den Statusspeicher 31 angelegt und nur das Feld in jedem Speicherplatz für den Vergleich freigegeben, welches die Zeitmarke enthält. Das sich ergebende Codewort mit den 1 Bit-Vergleichsignalen wird in dem Pufferspeicher 32 zwischengespeichert. Einen Schreibbefehl erhält der Pufferspeicher 32 von der Steuerschaltung 17 unter der Voraussetzung, daß mindestens ein 1 Bit-Vergleichssignal logisch "1" ist. Hierzu wird von der Steuerschaltung 17 das Ergebnissignal des ersten Prioritätsdecoders 40 ausgewertet. Würde eine solche Prüfung nicht vorgenommen, ergäbe sich ein Überlauf des Pufferspeichers 32.

Der Vielfach-Prioritätsdecoder 33 decodiert das in dem Pufferspeicher 32 zwischengespeicherte Codewort und liefert alle Adressen für den Auslesevorgang von Zellen aus der Ausgangsspeicheranordnung 16. Der Vielfach-Prioritätsdecoder 33 liefert ebenfalls der Steuerschaltung 17 ein Ergebnissignal, das Auskunft darüber gibt, ob eine Adresse gefunden worden ist.

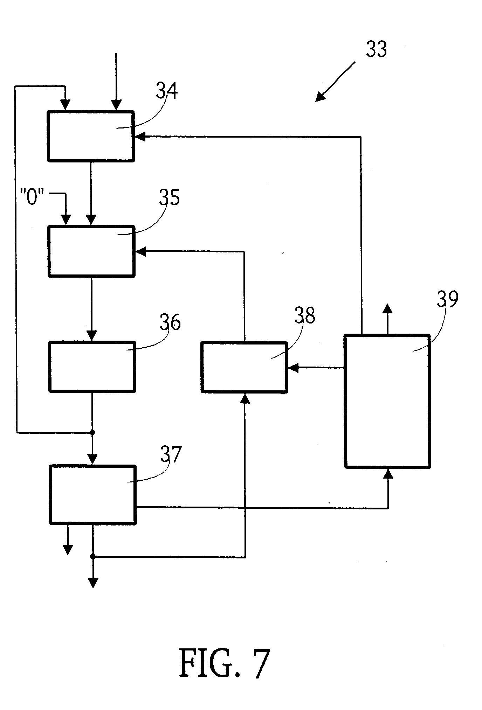

Ein Ausführungsbeispiel des Vielfach-Prioritätsdecoders 33 ist in der Fig. 7 dargestellt. Dieser enthält zwei Multiplexer 34 und 35, ein Register 36, einen zweiten Prioritätsdecoder 37, einen Adressendecoder 38 und eine Auswerteschaltung 39. Die Auswerteschaltung 39 steuert das Auslesen aus dem Pufferspeicher 32 und den Decodierprozeß. In den Multiplexer 34 wird nach einem Auslesebefehl der Auswerteschaltung 39 ein Codewort aus dem Pufferspeicher 32 ausgelesen. Der Adressendecoder 38 schaltet durch einen Befehl von der Auswerteschaltung 39 nach dem Zuführen eines neuen Codewortes den Multiplexer 35 so, daß dieser das neu vom Pufferspeicher 32 erhaltene Codewort zum Register 36 weiterleitet. Das in das Register 36 eingeschriebene Codewort wird dem zweiten Prioritätsdecoder 37 geliefert. Der zweite Prioritätsdecoder 37 arbeitet auf die gleiche Weise wie der erste Prioritätsdecoder 40 und liefert eine Adresse, wenn mindestens eine Stelle des Codewortes logisch "1" ist. Wenn mehrere Stellen logisch "1" sind, wird für die erste nach einer vorgegebenen Reihenfolge gesuchten Stelle, die logisch "1" ist, eine Adresse gebildet. Diese Adresse wird der Steuerschaltung 17 und auch dem Adressendecoder 38 zugeführt. Der Adressendecoder 38 steuert den Multiplexer 35 so, daß an der Stelle des Codewortes aus der die letzte Adresse gebildet worden ist, eine logische "0" eingefügt wird. Wenn der zweite Prioritätsdecoder 37 mindestens zwei logische "1" in dem im Register 36 gespeicherten Codewort erkannt hat, wird von diesem ein Ergebnissignal mit der entsprechenden Information an die Auswerteschaltung 39 gesendet. Die Auswerteschaltung 39 schaltet den Multiplexer 34 dann so um, daß das im Register 36 gespeicherte Codewort vom Multiplexer 34 zum Multiplexer 35 geführt wird. Der Multiplexer 35 blendet an einer durch den Adressendecoder 38 vorgegebenen Stelle eine logische "0" ein, so daß dem Register 36 ein neues um eine logische "1" vermindertes Codewort geliefert wird. Wenn das Codewort nur noch eine logische "1" enhält, wird dies der Auswerteschaltung 39 über das Ergebnissignal mitgeteilt. Beim nächsten Auslesezyklus wird dann ein neues Codewort vom Pufferspeicher 32 entnommen und der Zyklus beginnt erneut.

Die Steuerschaltung 17 liefert nach Erhalt einer Adresse einen Auslesebefehl und die Adresse an die Ausgangsspeicheranordnung 16. Diese liefert dann eine Zelle an die zugeordnete Ausgangsleitung 6.

Die Steuerschaltung 17 läßt sich als Prozessorbaustein oder als anwenderspezifische integrierte Schaltung realisieren. Die Funktionsweise der Steuerschaltung 17 läßt sich durch den folgenden Steuerungsablauf beschrieben: 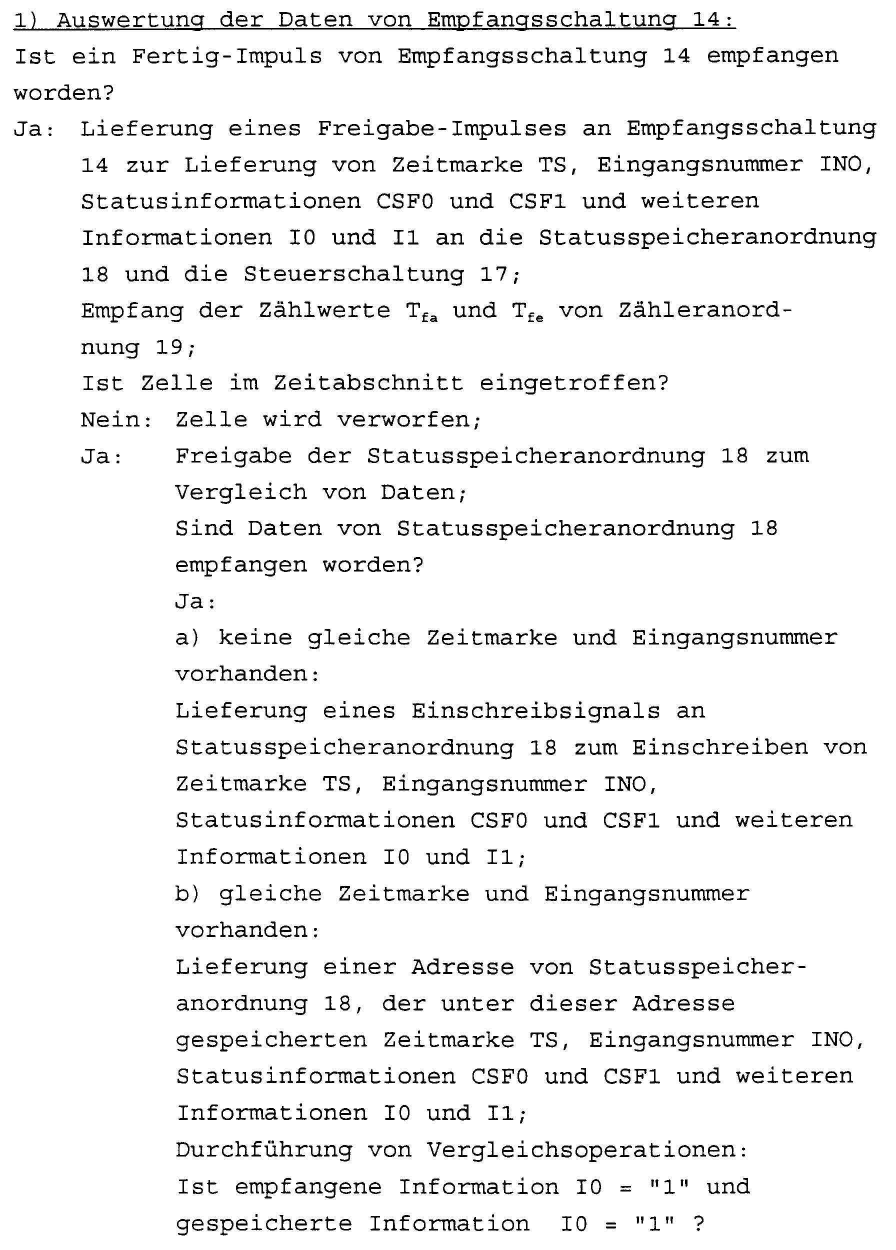 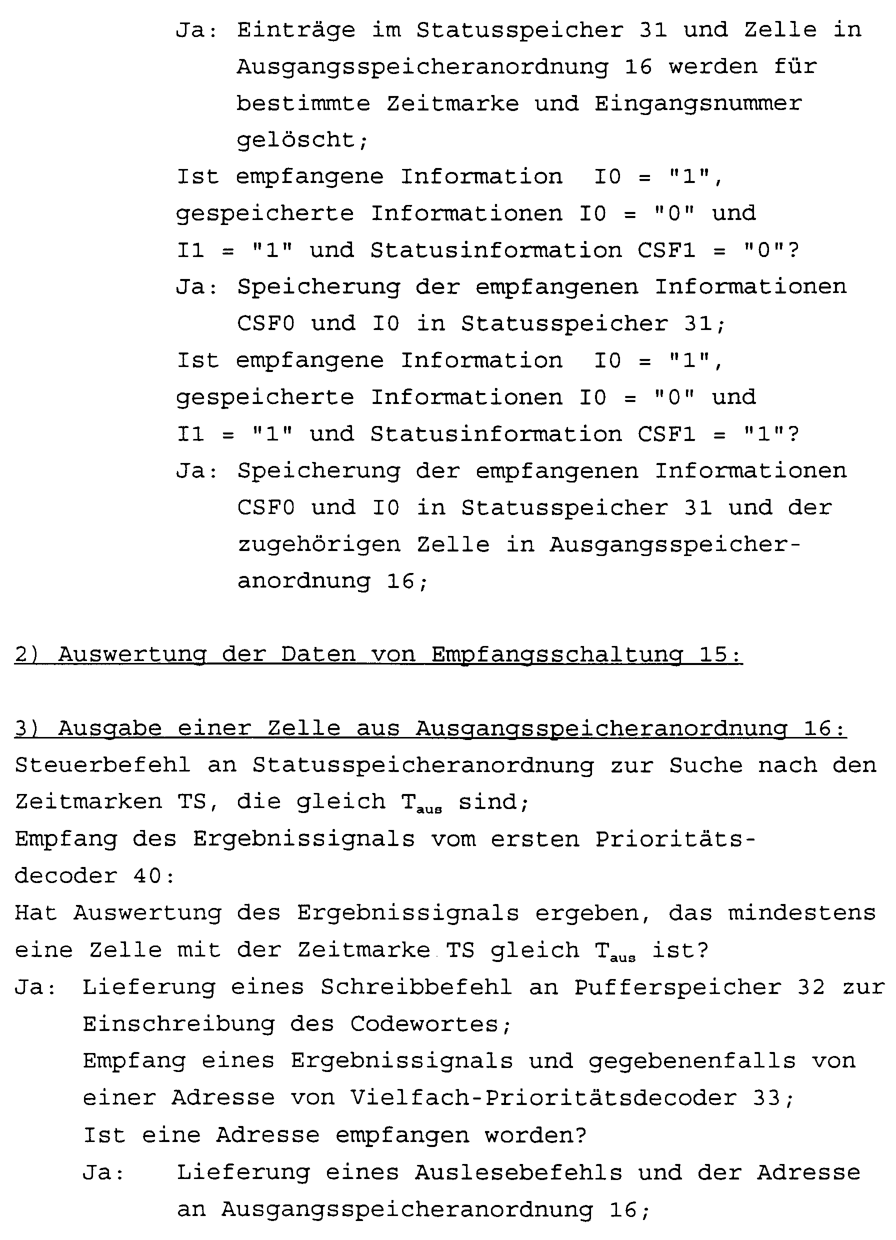
Den Beginn eines Zyklus entnimmt die Steuerschaltung 17 aus dem Taktsignal Tₙ₂. Ein Zyklus ist eingeteilt in drei Unterzyklen. Zuerst werden die Daten von der Empfangsschaltung 14 bearbeitet und gegebenenfalls in den Statusspeicher 31 und die Ausgangsspeicheranordnung 16 eingeschrieben, dann analog die Daten von der Empfangsschaltung 15 und zuletzt die Ausgabe von einer Zelle aus der Ausgangsspeicheranordnung gesteuert, wenn wenigstens eine Zelle in der Ausgangsspeicheranordnung 16 abgelegt ist. Die einzelnen Punkte des Steuerungsablaufes sind schon in der vorhergehenden Beschreibung erläutert worden. Der Steuerungsablauf, der sich auf die Bearbeitung der Daten der Empfangsschaltung 15 bezieht, läuft auf analoge Weise wie der Steuerungsablauf ab, der sich auf die Auswertung der Daten der Empfangsschaltung 14 bezieht.

## Patentansprüche

1. Paketübertragungssystem mit mehreren Eingangsschaltungen (2) jeweils zur Vervielfachung einer auf einer Eingangsleitung (1) eingetroffenen Zelle, die jeweils zur Übertragung über unterschiedliche Koppelfelder (3, 4) vorgesehen sind, und zur Erzeugung einer der jeweiligen Zelle mitzuliefernden Zeitmarke und
mit mehreren Ausgangsschaltungen (5) zur Auswahl einer zur Weiterleitung auf einer Ausgangsleitung (6) vorgesehenen Zelle aus einer Mehrzahl von die gleiche Zeitmarke aufweisenden, empfangenen Zellen,
dadurch gekennzeichnet,
daß eine Eingangsschaltung (2) zur weiteren Erzeugung einer die Eingangsschaltung (2) kennzeichnenden und der jeweiligen Zelle mitzuliefernden Eingangsnummer und die Ausgangsschaltung (5) anhand der Zeitmarke und der Eingangsnummer zur Herstellung der korrekten Reihenfolge von aufeinanderfolgenden Zellen vorgesehen ist.

2. Paketübertragungssystem nach Anspruch 1,
dadurch gekennzeichnet,
daß die Ausgangsschaltung (5)
- zur Speicherung einer von mehreren fehlerfrei übertragenen Zellen mit der gleichen Zeitmarke und der Eingangsnummer,
- zur Speicherung der Zeitmarke und der Eingangsnummer der zu speichernden Zelle und
- zur Weiterleitung einer Zelle mit der ältesten gespeicherten Zeitmarke auf die zugeordnete Ausgangsleitung (6) vorgesehen ist.

3. Paketübertragungssystem nach Anspruch 2,
dadurch gekennzeichnet,
daß die Ausgangsschaltung (5) zur Speicherung einer Zelle vorgesehen ist, wenn
- diese in einem von dem Sendezeitpunkt in der Eingangsschaltung (2) abhängigen Zeitabschnitt eingetroffen ist und
- keine Zelle mit der gleichen Zeitmarke und Eingangsnummer gespeichert ist oder eine fehlerhafte Zelle mit der gleichen Zeitmarke und Eingangsnummer gespeichert ist.

4. Paketübertragungssystem nach Anspruch 3,
dadurch gekennzeichnet,
daß die Ausgangsschaltung (5) zur Weiterleitung einer gespeicherten Zelle mit der ältesten Zeitmarke, die außerhalb des Zeitabschnittes liegt, auf die zugeordnete Ausgangsleitung (6) vorgesehen ist.

5. Paketübertragungssystem nach Anspruch 4,
dadurch gekennzeichnet,
daß die Ausgangsschaltung (5) bei mehreren gespeicherten Zellen mit der ältesten Zeitmarke aber unterschiedlichen Eingangsnummern zur Weiterleitung der Zellen in einer vorgegebenen Reihenfolge vorgesehen ist.

6. Paketübertragungssystem nach einem der vorhergehenden Ansprüche 2 bis 5,
dadurch gekennzeichnet,
daß die Ausgangsschaltung (5) eine Statusspeicheranordnung (18) zur Speicherung der Zeitmarke, der Eingangsnummer und des Status einer Zelle, eine Hauptspeicheranordnung (16) zur Speicherung der zugeordneten Zelle und eine Steuerschaltung (17) zur Steuerung der Statusspeicheranordnung (18) und der Hauptspeicher anordnung (16) enthält,
daß die Steuerschaltung (17)
- zur Freigabe des Einschreibens der Zelle, der Zeitmarke, der Eingangsnummer und des Status der Zelle bei nicht die gleiche Zeitmarke und Eingangsnummer aufweisenden, gespeicherten Zellen,
- zur Freigabe des Einschreibens der Zelle und des Status der Zelle bei einer gespeicherten, fehlerbehafteten Zelle mit der gleichen Zeitmarke und Eingangsnummer,
- zur Freigabe der Statusspeicheranordnung (18) für die Bestimmung aller Hauptspeicheradressen von bestimmten, außerhalb des Zeitabschnittes liegenden Zellen,
- zur Freigabe der Statusspeicheranordnung (18) für die Lieferung der Hauptspeicheradresse einer mit der ältesten Zeitmarke gespeicherten Zelle und
- zur Freigabe des Auslesens der unter der Hauptspeicheradresse gespeicherten Zelle vorgesehen ist.

7. Paketübertragungssystem nach Anspruch 3 und 6,
dadurch gekennzeichnet,
daß die Steuerschaltung (17) zur Prüfung vorgesehen ist, ob eine Zelle in dem Zeitabschnitt eingetroffen ist, und daß eine Zähleranordnung (19) in der Ausgangsschaltung (5) zur Lieferung des Anfangswertes und des Endwertes des Zeitabschnittes an die Steuerschaltung (17) vorgesehen ist.

8. Paketübertragungssystem nach Anspruch 7,
dadurch gekennzeichnet,
daß die Statusspeicheranordnung (18) einen Statusspeicher (31) enthält, der zur Speicherung der Zeitmarken, der Eingangsnummern und des Status der Zellen, zur Durchführung von Vergleichen zwischen gespeicherten und angelegten Daten und zur Weiterleitung der Vergleichsergebnisse an die Steuerschaltung (17) vorgesehen ist.

9. Paketübertragungssystem nach Anspruch 8,
dadurch gekennzeichnet,
daß die Statusspeicheranordnung (18) einen ersten Prioritätsdecoder (40) zur Ermittlung einer Hauptspeicheradresse für den Einschreibvorgang einer Zelle und einen Vielfach- Prioritätsdecoder (33) zur Ermittlung von Hauptspeicheradressen für den Auslesevorgang einer oder mehrerer Zellen enthält, daß zur Ermittlung der Hauptspeicheradresse für einen Einschreibvorgang einer Zelle der Statusspeicher (31) zur Lieferung eines Codewortes für eine bestimmte Zeitmarke und bestimmte Eingangsnummer und der erste Prioritätsdecoder (40) zur Lieferung einer Hauptspeicheradresse durch Decodierung des Codewortes vorgesehen ist und daß zur Ermittlung der Hauptspeicheradressen für den Auslesevorgang einer oder mehrerer Zellen der Statusspeicher (31) zur Lieferung eines Codewortes für eine bestimmte Zeitmarke und der Vielfach-Prioritätsdecoder (33) zur Lieferung mindestens einer Hauptspeicheradresse durch Decodierung des Codewortes vorgesehen ist.
